# EUROPÄISCHE PATENTSCHRIFT

(11) **EP 0 494 329 B1**
(45) Veröffentlichungstag und Bekanntmachung des Hinweises auf die Patenterteilung: **24.03.1999**
(21) Anmeldenummer: 91100274.9
(22) Anmeldetag: 10.01.1991
(51) Int. Cl.: G06F 12/02, G06F 12/06

(54) **Schaltungsanordnung zur Abbildung des logischen Adressraums einer Prozessoreinheit auf den physikalischen Adressraum eines Speichers**
Circuit device to map the logical address space of a processing unit onto the physical address space of a memory
Circuit électrique pour le mappage de l'espace d'adressage logique d'une unité de traitement vers l'espace d'adressage physique d'une mémoire

(43) Veröffentlichungstag der Anmeldung: 15.07.1992
(73) Patentinhaber: SIEMENS AKTIENGESELLSCHAFT, 80333 München (DE)
(72) Erfinder: Möller, Udo, Dipl.-Ing., W-4100 Duisburg (DE)

(56) Entgegenhaltungen:
- US-A- 4 959 778
- ELECTRONIQUE INDUSTRIELLES. Nr. 16, 15. Mai 1981, PARIS FR Seiten 75 - 80; A. DIOU: 'Augmentez la capacité d'adressage de votre microprocesseur '
- EDN ELECTRICAL DESIGN NEWS. Bd. 26, Nr. 22, November 1981, NEWTON, MASSACHUSETTS US Seiten 229 - 236; J. TOMASCEWSKI: 'Memory-mapping techniques expand 8-bit-uP applications '
- NEUES AUS DER TECHNIK. Nr. 6, 15. Dezember 1979, WURZBURG DE Seite 3; N.N: 'Automatischer Seitenwechselmechanismus für Mikroprozessoren '
- IBM TECHNICAL DISCLOSURE BULLETIN. Bd. 23, Nr. 3, August 1980, NEW YORK US Seiten 1109 - 1110; J.D.MCKINNEY ET AL.: 'Expanded storage '

## Beschreibung

Die Erfindung betrifft eine Schaltungsanordnung zur Abbildung des logischen Adreßraums einer Prozessoreinheit auf den physikalischen Adreßraum eines Speichers.

Für Prozessoreinheiten, beispielsweise Mikroprozessoren, Mikrocomputer oder Mikrocontroller, erschließen sich ständig neue Anwendungsgebiete. Damit steigen aber auch die Anforderungen an die Prozessoreinheiten und deren Architektur. Bei einer Vielzahl von Architekturen steht dabei dem logischen Adreßraum, also der Anzahl der durch die Prozessoreinheit darstellbaren Adressen, meist ein um ein Vielfaches größerer physikalischer Adreßraum, das heißt, die Anzahl aller bei einer zur Verfügung stehenden Speicherkapazität möglichen Adressen, gegenüber.

Aus der Textstelle "ELECTRONIQUE INDUSTRIELLE, Nr. 16, 15. Mai 1981, PARIS FR, Seiten 75-80; A. DIOU: ,"Augmentez la capacité d'adressage de votre microprocesseur'" ist ein Mikroprozessor bekannt, bei dem die Kapazität der Adressierung vergrößert ist. Dazu wird der vorhandene Speicherbereich in 16 Blöcke unterteilt, die jeweils wiederum in 16 Segmente gegliedert sind. Jedes Segment von diesen Blöcken ist über den Bus des Mikroprozessors mit einer Blockadresse auswählbar. Die Steuerung erfolgt über ein Register in jedem Block, das die Nummer des betreffenden Segments enthält. Ein zweites taktgesteuertes Register übernimmt jeweils am Anfang eines Taktzyklus den Inhalt des ersten Registers.

Die US 4,959,778 beschreibt eine Schaltungsanordnung zur Adressierung eines erweiterten Adressraumes mit einer ersten Gruppe herkömmlicher Register zur Speicherung von Adressinformationen und einer Gruppe von zusätzlichen Registern zur Speicherung von Adressinformationen, die länger sind, als die Adressinformationen in der Gruppe der herkömmlichen Register. In Abhängigkeit von einem Kontrollsignal wird eine dieser Gruppen ausgewählt.

In der Textstelle "EDN ELECTRICAL DESIGN NEWS, Bd. 26, Nr. 22, November 1981, NEWTON, MASSACHUSETS US, Seiten 229-236,; J. TOMASCEWSKI: 'Memory-mapping techniques expand 8-bit-µp applications'" ist die Verwendung von Eingabe/Ausgabe-Befehlen für den Z80-Prozessor beschrieben, mit denen in Verbindung mit einer Speicherabbildungseinheit der Adressraum bis zu 16 Megabyts erweitert werden kann.

In "NEUES AUS DER TECHNIK, Nr. 6, 15. Dezember 1979, WÜRZBURG DE, Seite 3: N.N. 'Automatischer Seitenwechselmechanismus für Mikroprozessoren'" ist ein Seitenwechselmechanismus für einen Mikroprozessor beschrieben, bei dem sich ein inneres Seitenregister auf dem Mikroprozessor und ein äußeres Seitenregister sich außerhalb des Chips befindet. Sobald der Inhalt des inneren Seitenregisters sich ändert, wird dessen Inhalt in das äußere Seitenregister kopiert.

Aufgabe der Erfindung ist es daher, eine Schaltungsanordnung anzugeben, die den logischen Adreßraum einer Prozessoreinheit auf den physikalischen Adreßraum eines Speichers abbildet.

Die Aufgabe wird durch eine Schaltungsanordnung gemäß Patentanspruch 1 gelöst. Ausgestaltungen und Weiterbildungen des Erfindungsgedankens sind Gegenstand von Unteransprüchen.

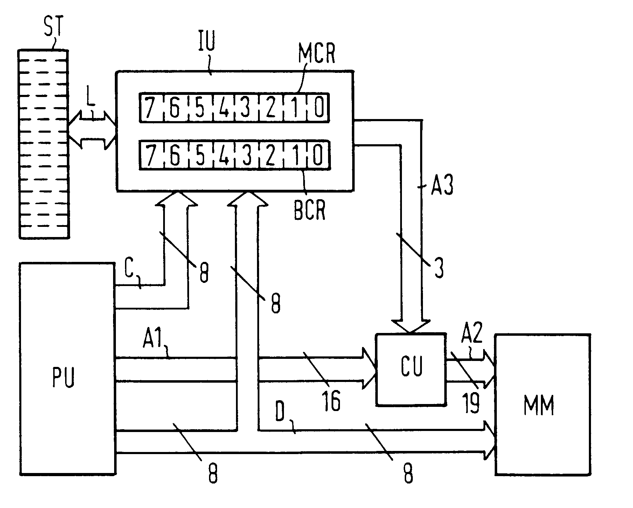

Die Erfindung wird nachfolgend anhand des in der einzigen Figur der Zeichnung dargestellten Ausführungsbeispiels näher erläutert.

Bei diesem Ausführungsbeispiel wird von einer gegebenen Prozessoreinheit PU und einem gegebenen Speicher MM ausgegangen. Die Prozessoreinheit PU ist an acht Datenleitungen D, an sechszehn erste Adreßleitungen A1 und an acht Steuerleitungen C angeschlossen. Die Datenleitungen D sind zudem mit dem Speicher MM, der darüber hinaus an neunzehn zweite Adreßleitungen A2 angeschlossen ist, und mit einer Interpretationseinheit IU verbunden. Die Interpretationseinheit IU, die ein Bereichskontrollregister BCR und ein Moduskontrollregister MCR enthält, ist zudem mit den Kontrolleitungen C sowie drei dritten Adreßleitungen A3 verschaltet. Außerdem ist ein Stapelregister ST über Verbindungsleitungen L mit der Interpretationseinheit IU gekoppelt. Schließlich ist eine Verknüpfungseinheit CU vorgesehen, die mit ersten, zweiten und dritten Adreßleitungen A1,A2,A3 verbunden ist.

Das Bereichskontrollregister BCR weist eine Breite von 8 Bit auf, wobei drei der vier höherwertigen Bit - Bit 4,5 und 6 - einen ersten Registerbereich und die drei niederwertigen Bit - Bit 0,1 und 2 - einem zweiten Registerbereich zugeordnet sind. Die Prozessoreinheit PU kann auf die beiden Registerbereiche zugreifen, und zwar dergestalt, daß beide Bereiche gelesen werden können, jedoch nur der zweite Bereich beschrieben werden kann. Das Schreiben bzw. Lesen des Bereichskontrollregisters BCR durch die Prozessoreinheit PU erfolgt über die Datenleitungen D. Darüber hinaus kann durch die Interpretationseinheit IU zum einen der Inhalt des ersten Registerbereiches an die Verknüpfungseinheit CU ausgelesen werden und zum anderen der Inhalt des zweiten Registerbereichs in den ersten Registerbereich übernommen werden. Folglich werden zur Übertragung des Inhalts des ersten Registerbereichs an die Verknüpfungseinheit CU lediglich drei dritte Adreßleitungen A3 benötigt. Die verbleibenden Bit des Bereichskontrollregisters BCR - Bit 3 und 7 - können gegebenenfalls für andere Zwecke verwendet werden oder mit einem festen logischen Pegel beaufschlagt werden. Die Verknüpfungseinheit CU bildet aus den sechszehn Bit der von der Prozessoreinheit PU gelieferten Adresse und den drei Bit der von der Interpretationseinheit IU erhaltenen Adresse eine neunzehn Bit breite Gesamtadresse, die über die zweiten Adreßleitungen A2 dem Speicher MM zugeführt wird. Die beiden Adressen werden beispielsweise derart verknüpft, daß die 3 Bit der Interpretationseinheit IU die drei höherwertigen Bit und die 16 Bit der Prozessoreinheit PU die sechszehn niederwertigen Bit der Gesamtadresse ergeben. Somit ist der durch den Speicher MM festgelegte physikalische Adreßraum um drei Bit größer bzw. achtmal so groß als der durch die Prozessoreinheit PU bestimmte logische Adreßraum. Dies kann auch so interpretiert werden, daß der Speicher MM in acht Speicherbereiche eingeteilt ist, die jeweils für sich durch die Prozessoreinheit PU selbst adressierbar sind. Dagegen wird der jeweilige Speicherbereich durch die drei von der Interpretationseinheit IU der Verknüpfungseinheit CU zugeführten Bit ausgewählt. Die im Bereichskontrollregister eingeschriebenen Daten stellen somit Bereichskennzahlen dar, wobei die im ersten Registerbereich stehende Bereichskennzahl den aktuellen Speicherbereich kennzeichnet und der Inhalt des zweiten Registerbereichs den als nächsten zu bearbeitenden Speicherbereich kennzeichnet.

Die Funktionsweise beruht nun darauf, daß die Interpretationseinheit IU den logischen Zustand der Prozessoreinheit PU anhand der auf den Steuerleitungen C übertragenen Signale und gegebenenfalls auch anhand der auf den Datenleitungen D empfangenen Signale ermittelt und bei bestimmten Zuständen entsprechend reagiert. Bei Auftreten bestimmter Zustände wird der Inhalt des zweiten Registerbereichs in den ersten Registerbereich übernommen und damit ein anderer Speicherbereich ausgewählt. Das bedeutet, daß das Beschreiben des Bereichskontrollregisters BCR durch die Prozessoreinheit PU niemals zur gleichen Zeit erfolgt wie eine Änderung des Speicherbereichs, wodurch sich eine Verzögerung zwischen Beschreiben und Freigabe des entsprechenden Speicherbereichs ergibt.

Ein Rücksetzen der Prozessoreinheit PU wird von der Interpretationseinheit IU erkannt, die daraufhin das Bereichskontrollregister BCR insgesamt gleich Null setzt. Das bedeutet, daß auch der erste und zweite Registerbereich und damit die aktuelle Bereichskennzahl und die nächste Bereichskennzahl gleich Null sind. Die Prozessoreinheit PU beginnt daraufhin mit der Abarbeitung ihres Programms in dem Speicherbereich mit der Bereichskennzahl Null. Während des Programmablaufs wird nun an beliebiger Stelle die Bereichskennzahl des als nächsten ausgewählten Speicherbereichs in den zweiten Registerbereich eingeschrieben. Im weiteren Verlauf kann dann durch bestimmte Steuersignale ein Speicherbereichswechsel durchgeführt werden, indem der Inhalt des zweiten Registerbereichs in den ersten Registerbereich übernommen wird.

In Weiterbildung der Erfindung weist die Interpretationseinheit IU das Moduskontrollregister MCR auf, bei dem ein Bit, beispielsweise das höherwertigste Bit 7, zur Kennzeichnung eines Datenspeichermodus vorgesehen ist. Bei diesem Betriebsfall ist Bit 7 gleich einer logischen Eins. Ein weiteres Bit des Moduskontrollregisters MCR, beispielsweise das Bit 3, signalisiert durch eine logische Null, ob der Stapelspeicher ST gefüllt ist. Darüber hinaus bilden Bit 4,5 und 6 einen dritten Registerbereich und Bit 0,1 und 2 einen vierten Registerbereich.

Bei gesetztem Bit 7, im folgenden Memory-Mode-Bit genannt, des Moduskontrollregisters MCR, erscheint bei Datenzugriffen der Prozessoreinheit PU anstelle des Inhalts des ersten Registerbereichs der Inhalt des dritten Registerbereichs auf den dritten Adreßleitungen A3. Ist das Memory-Mode Bit beispielsweise gleich einer logischen Eins, ändert sich die Adresse auf den dritten Adreßleitungen bei Datenzugriffen nicht. Außerdem kann die Interpretationseinheit IU gegebenenfalls den Inhalt des ersten oder zweiten Registerbereichs in den dritten Registerbereich übertragen.

Zur einfacheren Handhabung von Unterprogrammaufrufbefehlen und Interrupts ist in Weiterbildung der Erfindung der Stapelspeicher ST mit sechszehn jeweils sechs Bit breiten Einzelregistern vorgesehen. Bei bestimmten Unterprogrammaufrufbefehlen werden der erste und zweite Registerbereich des Bereichskontrollregisters in das Stapelregister ST übertragen und ein Speichererweiterungszeiger wird inkrementiert. Daraufhin wird der Inhalt des zweiten Registerbereichs in den ersten Registerbereich übertragen. Beim Verlassen des Unterprogramms mit bestimmten Befehlen wird der Zeiger dekrementiert und die alten Inhalte des ersten und zweiten Register bereichs werden aus dem Stapelspeicher ausgelesen. Dies dient dazu, um bei eventuell auftretenden Interrupts den bisherigen Zustand zu sichern. Weitere Vereinfachung in der Handhabung von Interrupts werden dadurch erzielt, daß bei Auftreten eines Interrupts der Inhalt des vierten Registerbereiches beim Moduskontrollregister MCR in den ersten und zweiten Registerbereich beim Bereichskontrollregister BCR übertragen werden, nachdem deren Inhalte dem Stapelregister ST übergeben worden sind. Dadurch wird erreicht, daß beim Programmieren Interrupt-Service-Routinen in einem speziellen Speicherbereich abgelegt werden können. Nach einem Reset werden das Memory-Mode-Bit, der dritte Registerbereich und der vierte Registerbereich gleich Null gesetzt.

Schließlich dient vorteilhafterweise ein Stapelregisterüberlaufbit, nämlich Bit 3 des Moduskontrollregisters MCR, dazu, bei weitläufigen Unterprogrammverzweigungen einen bevorstehenden Überlauf des Stapelregisters ST anzuzeigen, um einen Verlust der Programmsteuerung zu vermeiden.

Entscheidend ist, daß eine Freigabe des ausgewählten Speicherbereiches nicht sofort mit dem Beschreiben des entsprechenden Registerbereiches, nämlich des ersten Registerbereiches, stattfindet, sondern nur in Abhängigkeit von bestimmten Befehlen und von diesen wiederum abgeleiteten logischen Zuständen oder bestimmter anderer logischer Zustände der Prozessoreinheit PU. . Bei Sprung befehlen und Unterprogrammaufrufbefehlen gibt man beispielsweise die Zieladresse an und aktiviert damit gleichzeitig auch einen neuen Speicherbereich. Die Aktivierung nimmt die Interpretationseinheit IU vor, weil diese einen entsprechenden logischen Zustand der Prozessoreinheit PU erkennt. Durch das Stapelregister ST wird nun ermöglicht, daß Unterprogrammaufrufbefehle im gesamten physikalischen Adreßraum möglich sind, da im Stapelspeicher ST die jeweiligen Bereichskennzahlen abgespeichert werden. Ein in der Prozessoreinheit PU vorhandener Stapelspeicher ist nämlich nicht in der Lage, eine erweiterte Adresse abzuspeichern. Außerdem ist der Stapelspeicher ST auch für die Interrupt-Behandlung vorteilhaft. Damit Daten und Befehle nicht im gleichen Speicherbereich liegen müssen, kann bei entsprechenden Befehlen der Datenzugriff auf einen anderen Speicherbereich umgelenkt werden. Die Software-Entwicklung kann vorteilhafterweise weitgehend mit existierenden Tools erfolgen.

Neben dem geringen Schaltungsaufwands zeichnet sich eine erfindungsgemäße Schaltungsanordnung durch Erleichterungen bei der Programmentwicklung aus, da ein Wechsel der Speicherbereiche unabhängig vom Beschreiben des zugeordneten Registers ist, da Interrupt-Service-Routinen nicht in jedem Speicherbereich abgelegt werden müssen, da Daten und Programm nicht im gleichen Speicherbereich abgelegt werden müssen und da Programmverschachtelungen ohne weiteres möglich sind.

## Patentansprüche

1. Schaltungsanordnung zur Abbildung des logischen Adreßraums einer Prozessoreinheit (PU) auf den physikalischen Adreßraum eines Speichers (MM) mit einer über Daten- und Steuerleitungen (D,C) mit der Prozessoreinheit (PU) verbundenen Interpretationseinheit (IU), die ein in einen ersten Registerbereich und in einen, durch die Prozessoreinheit (PU) zu beschreibenden, zweiten Registerbereich aufgeteiltes Register (BCR) enthält, wobei die Interpretationseinheit (IU) den logischen Zustand der Prozessoreinheit (PU) fortlaufend anhand der auf den Steuerleitungen (C) übertragenen Signale ermittelt, bei bestimmten logischen Zuständen den Inhalt des zweiten Registerbereichs in den ersten Registerbereich einschreibt und den Inhalt des ersten Registerbereichs als Adresse ausgibt, und mit einer über Adreßleitungen (A1,A2,A3) mit der Prozessoreinheit (PU), der Interpretationseinheit (IU) und dem Speicher (MM) verbundenen Verknüpfungseinheit (CU), die aus von der Interpretationseinheit (IU) und der Prozessoreinheit (PU) übertragenen Adressen eine Gesamtadresse für den Speicher (MM) bildet.

2. Schaltungsanordnung nach Anspruch 1, **dadurch gekennzeichnet,** daß das Register (BCR) der Interpretationseinheit (IU) durch die Prozessoreinheit (PU) lesbar ist.

3. Schaltungsanordnung nach Anspruch 1 oder 2, **dadurch gekennzeichnet,** daß ein Stapelregister (ST), an die Interpretationseinheit (IU) angeschlossen ist, in das bei bestimmten logischen Zuständen der Prozessoreinheit (PU) der Inhalt von erstem und zweitem Registerbereich eingelesen wird und das bei anderen bestimmten logischen Zuständen an dem ersten und zweiten Registerbereich ausgelesen wird.

4. Schaltungsanordnung nach einem der Ansprüche 1 bis 3, **dadurch gekennzeichnet,** daß die Interpretationseinheit (IU) ein weiteres Register (MCR) mit zwei weiteren Registerbereichen enthält, in die bei Auftreten bestimmter logischer Zustände jeweils durch die Prozessoreinheit (PU) eingelesen wird.

5. Schaltungsanordnung nach einem der Ansprüche 1 bis 4,**dadurch gekennzeichnet,** daß bei dem weiteren Register (MCR) ein durch die Prozessoreinheit (PU) setzbares Bit vorgesehen ist, von dessen Zustand abhängig bei bestimmten logischen Zuständen der Prozessoreinheit (PU) entweder der erste Registerbereich oder ein weiterer Registerbereich durch die Interpretationseinheit (IU) ausgelesen wird.

6. Schaltungsanordnung nach einem der Ansprüche 1 bis 5, **dadurch gekennzeichnet,** daß bei dem weiteren Register (MCR) ein weiteres Bit vorgesehen ist, das einen Uberlauf des Stapelregisters (ST) der Prozessoreinheit (PU) ankündigt.

7. Schaltungsanordnung nach einem der Ansprüche 1 bis 6, **dadurch gekennzeichnet,** daß die Interpretationseinheit (IU) beim Rücksetzen der Prozessoreinheit (PU) den ersten und zweiten Registerbereich in einen festgelegten Zustand bringt.

## Claims

1. Circuit arrangement for mapping the logical address space of a processor unit (PU) onto the physical address space of a memory (MM) having an interpretation unit (IU), which is connected to the processor unit (PU) via data and control lines (D,C) and contains a register (BCR), which is divided into a first register area and into a second register area, to be written to by the processor unit (PU), the interpretation unit (IU) continually determining the logical state of the processor unit (PU) from the signals transmitted on the control lines (C) and, in the event of specific logical states, writing the content of the second register area to the first register area and outputting the content of the first register area as address, and having a combinational unit (CU), which is connected via address lines (A1,A2,A3) to the processor unit (PU), the interpretation unit (IU) and the memory (MM) and forms an overall address for the memory (MM) from addresses transmitted by the interpretation unit (IU) and by the processor unit (PU).

2. Circuit arrangement according to Claim 1, characterized in that the register (BCR) of the interpretation unit (IU) can be read by the processor unit (PU).

3. Circuit arrangement according to Claim 1 or 2, characterized in that a stack register (ST) is connected to the interpretation unit (IU), into which stack register the content of the first and second register areas is read in the event of specific logical states of the processor unit (PU), and which stack register is read out at the first and second register areas in the event of other specific logical states.

4. Circuit arrangement according to one of Claims 1 to 3, characterized in that the interpretation unit (IU) contains a further register (MCR) having two further register areas, into which reading is effected by the processor unit (PU) in each case when specific logical states occur.

5. Circuit arrangement according to one of Claims 1 to 4, characterized in that a bit which can be set by the processor unit (PU) is provided in the further register (MCR), depending on the state of which bit either the first register area or a further register area is read out by the interpretation unit (IU) in the event of specific logical states of the processor unit (PU).

6. Circuit arrangement according to one of Claims 1 to 5, characterized in that a further bit is provided in the further register (MCR), which further bit indicates overflowing of the stack register (ST) of the processor unit (PU).

7. Circuit arrangement according to one of Claims 1 to 6, characterized in that in the event of the processor unit (PU) being reset, the interpretation unit (IU) brings the first and second register areas into a defined state.

## Revendications

1. Circuit pour la projection de l'espace d'adressage logique d'une unité de traitement (PU) sur l'espace d'adressage physique d'une mémoire (MM), comportant une unité d'interprétation (IU) qui est reliée par l'intermédiaire de lignes de données (D) et de lignes de commande (C) à l'unité de traitement (PU) et qui contient un registre (BCR) divisé en une première zone de registre et en une deuxiéme zone de registre dans laquelle l'unité de traitement (PU) écrit, l'unité d'interprétation (IU) déterminant en permanence l'état logique de l'unité de traitement (PU) à l'aide des signaux transmis sur les lignes de commande (C), écrivant pour certains états logiques le contenu de la deuxième zone de registre dans la première zone de registre et délivrant comme adresse le contenu de la première zone de registre, et une unité combinatoire (CU) qui est reliée par l'intermédiaire de lignes d'adresses (A1, A2, A3) à l'unité de traitement (PU), à l'unité d'interprétation (IU) et à la mémoire (MM) et qui forme à partir d'adresses transmises par l'unité d'interprétation (IU) et par l'unité de traitement (PU) une adresse globale pour la mémoire (MM).

2. Circuit selon la revendication 1, caractérisé par le fait que le registre (BCR) de l'unité d'interprétation (IU) peut être lu par l'unité de traitement (PU).

3. Circuit selon la revendication 1 ou 2, caractérisé par le fait qu'il est raccordé à l'unité d'interprétation (IU) une pile de registres (ST) dans laquelle, pour certains états logiques de l'unité de traitement (PU), le contenu de la première et de la deuxième zones de registre est enregistré et qui, pour certains autres états logiques, est lue pour écrire dans la première et la deuxième zones de registre.

4. Circuit selon l'une des revendications 1 à 3, caractérisé par le fait que l'unité d'interprétation (IU) contient un autre registre (MCR) comportant deux autres zones de registre dans lesquelles, lors de l'apparition de certains états logiques, l'unité de traitement (PU) écrit.

5. Circuit selon l'une des revendications 1 à 4, caractérisé par le fait que, dans l'autre registre (MCR), il est prévu un bit qui peut être affecté par l'unité de traitement (PU) et en fonction de l'état duquel, pour certains états logiques de l'unité de traitement (PU), soit la première zone de registre, soit une autre zone de registre, est lue par l'unité d'interprétation (IU).

6. Circuit selon l'une des revendications 1 à 5, caractérisé par le fait que, dans l'autre registre (MCR), il est prévu un autre bit qui indique un débordement de la pile de registres (ST) à l'unité de traitement (PU).

7. Circuit selon l'une des revendications 1 à 6, caractérisé par le fait que, lors de la remise à l'état initial de l'unité de traitement (PU), l'unité d'interprétation (IU) met la première et la deuxième zones de registre dans un état fixé.
